# EUROPÄISCHE PATENTSCHRIFT

(11) **EP 1 723 311 B1**
(45) Veröffentlichungstag und Bekanntmachung des Hinweises auf die Patenterteilung: **07.04.2010**
(21) Anmeldenummer: 05733929.3
(22) Anmeldetag: 26.02.2005
(51) Int. Cl.: F01D 5/14, F04D 29/68

(54) **GASTURBINENSCHAUFEL**
GAS TURBINE VANE
AUBE DE TURBINE A GAZ

(30) Priorität: 28.02.2004 DE 102004009755
(43) Veröffentlichungstag der Anmeldung: 22.11.2006
(73) Patentinhaber: MTU Aero Engines GmbH, 80995 München (DE)
(72) Erfinder: Bamberg, Joachim, 85221 Dachau (DE); Heitmeir, Franz, A-8010 Graz (AT); Rossmann, Axel, 85757 Karlsfeld (DE)
(86) Internationale Anmeldenummer: PCT/DE2005/000329
(87) Internationale Veröffentlichungsnummer: WO 2005/083234

(56) Entgegenhaltungen:
- EP-A- 1 186 749
- EP-A- 1 371 813
- WO-A-03/104615
- DE-A1- 10 159 056
- GB-A- 580 806
- GB-A- 2 068 502
- US-A- 3 014 640
- US-A- 4 907 765
- US-A- 5 337 568
- US-A- 5 653 110
- US-A- 5 681 661
- US-A- 5 860 626
- US-B1- 6 488 238
- US-B1- 6 666 646
- PATENT ABSTRACTS OF JAPAN Bd. 1999, Nr. 09, 30. Juli 1999 (1999-07-30) -& JP 11 117703 A (MITSUBISHI HEAVY IND LTD), 27. April 1999 (1999-04-27)
- BECHERT D W;BRUSE M;HAGE W;MEYER R: "Fluid Mechanics of Biological Surfaces and their Technological Application" NATURWISSENSCHAFTEN, Nr. 87, 2000, Seiten 157-171, XP002331781 SPRINGER VERLAG, BERLIN.

## Beschreibung

Die Erfindung betrifft eine Laufschaufel des Verdichters einer Gasturbine, insbesondere eines Flugtriebwerks, gemäß dem Oberbegriff des Patentanspruchs 1.

Gasturbinen, wie zum Beispiel Flugtriebwerke, bestehen aus mehreren Baugruppen, nämlich einem Lüfter bzw. Fan, vorzugsweise mehreren Verdichtern, einer Brennkammer, sowie vorzugsweise mehreren Turbinen. Zur Verbesserung des Wirkungsgrads und Arbeitsbereichs solcher Gasturbinen ist es erforderlich, alle Subsysteme bzw. Komponenten der Gasturbine zu optimieren. Die hier vorliegende Erfindung betrifft die Verbesserung des Umströmungsverhaltens von Gasturbinenschaufeln, insbesondere von Laufschaufeln eines Verdichters der Gasturbine.

Verdichter von Gasturbinen bestehen in der Regel aus mehreren in Durchströmung axial hintereinander angeordneten Stufen, wobei jede Stufe von durch einem Rotor zugeordneten, einen Laufschaufelkranz bildenden Laufschaufeln sow ie einem Leitschaufelkranz gebildet wird. Die dem Rotor zugeordneten, den Laufschaufelkranz bildenden Laufschaufeln rotieren zusammen mit dem Rotor gegenüber den feststehenden Leitschaufeln und einem ebenfalls feststehend ausgebildeten Gehäuse. Zur Reduzierung von Herstellungskosten werden zunehmend kompakte Bauformen von Verdichtern mit möglichst geringen Stufenzahlen angestrebt. Andererseits steigen aufgrund der stetigen Optimierung des Wirkungsgrads sowie Arbeitsbereichs derartiger Verdichter die Gesamtdruckverhältnisse innerhalb der Gasdruckturbine und damit die Stufendruckverhältnisse zwischen einzelnen Stufen.

Bei zunehmend größer werdenden Stufendruckverhältnissen und zunehmend geringeren Stufenzahlen ergeben sich zwangsläufig höhere Umfangsgeschwindigkeiten der rotierenden Bauteile des Verdichters. Die mit der Reduzierung der Stufenzahl steigenden Drehzahlen führen einerseits zu wachsenden mechanischen Belastungen insbesondere an den mit dem Rotor rotierenden Laufschaufeln und andererseits zu transsonischen Strömungsverhältnissen innerhalb der Schaufelgitter. Bei derartigen Strömungsverhältnissen bedarf es einer optimierten, aerodynamischen Auslegung der Gasturbinenschaufeln.

Aus der US 6,666,646 B1 ist eine Gasturbinenbauteil bekannt, bei dem zur Verminderung des Luftwiderstandes sog. Riblet-Strukturen vorgesehen sind.

Die US 5,337,568 A schlägt vor, ein Schaufelblatt mit mit Mikrorillen zu versehen, um so eine Kühlwirkung zu erzielen.

Die WO 03/104615 A1 schlägt vor, zur Verminderung des Strömungswiderstandes eines Werkstücks eine Haifischhaut vorzusehen.

Aus der EP 1 186 749 A1 ist eine Strömungsmaschine bekannt, die einen Strömungskanal ausweist, der von einer zumindest bereichsweise mit einer unbenetzbaren, als durch Aufbringen einer Schicht mittels Mirkrostrukturierung gestalteten Oberflächenstruktur versehenen Kanalwand begrenzt wird.

Die US 6,488,238 B1 offenbart eine Schaufel für Gasturbinen, die abschnittsweise poröse Wandabschnitte aufweist.

Die DE 101 59 056 A1 offenbart ein Bauteil, das mit einer Kühlschicht versehen ist. Die Kühlschicht ist dabei als Farbschicht gestaltet ist, der eine Mikrostruktur gegeben ist.

Die EP 1 371 813 offenbart als nächstliegender Stand der Technik alle Merkmale des Oberbegriffs des Anspruchs 1.

Hiervon ausgehend liegt der vorliegenden Erfindung das Problem zu Grunde eine neuartige Gasturbinenschaufel zu schaffen.

Dieses Problem wird durch eine Gasturbinenschaufel gemäß Patentanspruch 1 gelöst. Erfindungsgemäß weist die Saugseite des Schaufelblatts der Gasturbinenschaufel mindestens einen mikroprofilierten bzw. mikrostrukturierten Bereich auf, um eine Umströmung der Saugseite bzw. des Schaufelblatts zu optimieren.

Im Sinne der hier vorliegenden Erfindung wird eine als Verdichterschaufel gestaltete Gasturbinenschaufel vorgeschlagen, die ein deutlich verbessertes Strömungsverhalten aufweist. Es ist eine Erkenntnis der hier vorliegenden Erfindung, zur Optimierung des Wirkungsgrads einer Gasturbine an den Saugseiten der Schaufelblätter von Gasturbinenschaufeln mikroprofilierte bzw. mikrostrukturierte Bereiche nach Anspruch 1 vorzusehen. Der Erfindung liegt die Erkenntnis zugrunde, dass eine zu vermeidende Strömungsablösung an einer Gasturbinenschaufel und damit ein Strömungsabriss in erster Linie auf der Saugseite des Schaufelblatts bzw. der Gasturbinenschaufel erfolgt, wobei die Saugseite einer Gasturbinenschaufel weiterhin weniger stark einem Verschleiß, zum Beispiel einer Erosion, oder auch einer Verschmutzung ausgesetzt ist, und daher die Saugseite mit effektiven Mikroprofilierungen bzw. Mikrostrukturierungen versehen werden kann. Mit einer derartigen Mikrostrukturierung bzw. Mikroprofilierung der Gasturbinenschaufel an deren Saugseite lässt sich die Umströmung der Gasturbinenschaufel stabilisieren und damit der Betriebesbereich derselben und damit letztendlich der Arbeitsbereich der Gasturbine optimieren.

Nach einer vorteilhaften Weiterbildung der Erfindung ist der oder jeder mikroprofilierte bzw. mikrostrukturierte Bereich einem Abschnitt der Saugseite des Schaufelblatts zugeordnet, an welchem eine Strömungsverzögerung erfolgt. Dieser Abschnitt erstreckt sich insbesondere zwischen 30% und 70% der Profiltiefe des Schaufelblatts.

Vorzugsweise ist der oder jeder mikroprofilierte bzw. mikrostrukturierte Bereich haifischhautartig profiliert bzw. strukturiert.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: eine Gasturbinenschaufel des Standes der Technik in stark schematisierter, perspektivischer Seitenansicht; und
- Fig. 2: eine erfindungsgemäße Gasturbinenschaufel nach einem Ausführungsbeispiel der Erfindung in stark schematisierter, perspektivischer Seitenansicht.

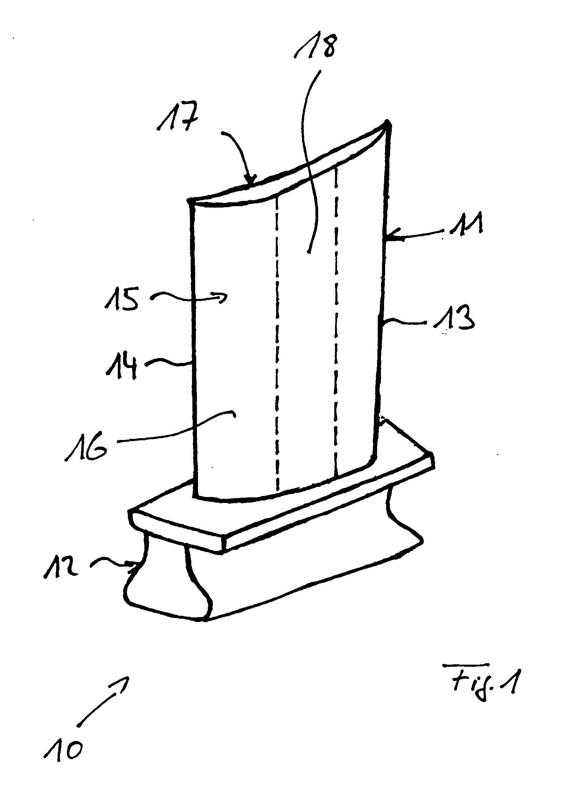

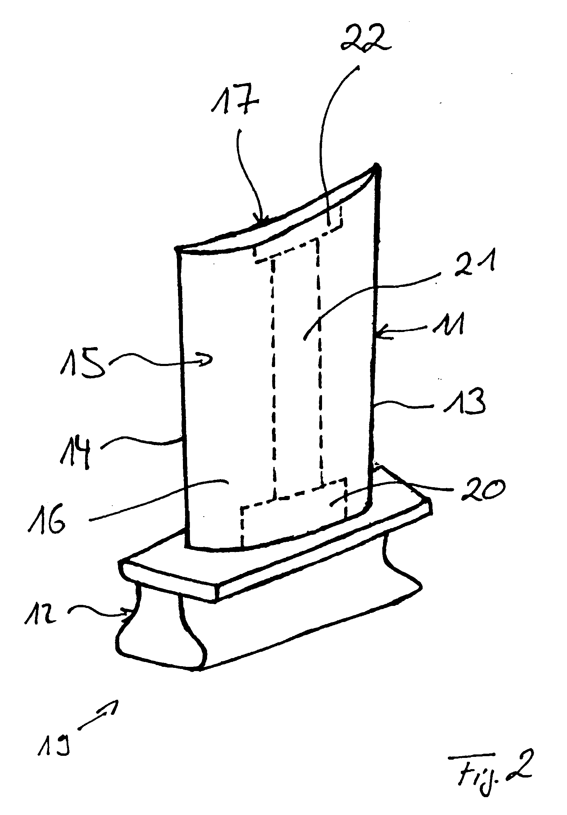

Nachfolgend wird die hier vorliegende Erfindung unter Bezugnahme auf Fig. 1 und 2 in größerem Detail beschrieben.

Fig. 1 zeigt eine Gasturbinenschaufel 10 in perspektivischer Seitenansicht. Die Gasturbinenschaufel 10 der Fig. 1 umfasst ein Schaufelblatt 11 sowie einen sich an das Schaufelblatt 11 anschließenden Schaufelfuß 12. Das Schaufelblatt 11 wird von einer Strömungseintrittskante bzw. einer Vorderkante 13, einer Strömungsaustrittskante bzw. einer Hinterkante 14 und einer sich zwischen der Vorderkante 13 und der Hinterkante 14 erstreckenden Schaufelblattoberfläche 15 begrenzt. Die Schaufelblattoberfläche 15 bildet eine Saugseite 16 sowie eine Druckseite 17 des Schaufelblatts 11 der Gasturbinenschaufel 10.

Der Saugseite 16 des Schaufelblatts 11 mindestens ein mikrostrukturierter bzw. mikroprofilierter Bereich zugeordnet.

In der Fig. 1 ist lediglich ein einziger derartiger mikroprofilierter bzw. mikrostrukturierter Bereich 18 vorhanden. Dieser erstreckt sich gemäß Fig. 1 über die gesamte radiale Höhe des Schaufelblatts 11.

Der mikroprofilierte Bereich 18 ist dabei einem Abschnitt der Saugseite 16 zugeordnet, in welchem eine Strömungsverzögerung erfolgt. Ausgehend von der Vorderkante 13 des Schaufelblatts 11 der Gasturbinenschaufel 10 erfolgt an der Saugseite 15 zuerst eine Strömungsbeschleunigung und dann eine Strömungsverzögerung. Insbesondere an den Bereichen der Saugseite 16 des Schaufelblatts 11, an denen die Strömungsverzögerung erfolgt, besteht die Gefahr der Ablösung der Strömung und damit eines Strömungsabrisses. Gerade in diesem Abschnitt der Saugseite 16, in welchem eine Strömungsverzögerung erfolgt ist der mikroprofilierte bzw. mikrostrukturierte Bereich 18 angeordnet. Dieser erstreckt sich dabei vorzugsweise zwischen 30% und 70%, insbesondere zwischen 30% und 50%, der Profiltiefe des Schaufelblatts 11. Er ist demnach einem mittleren Bereich der Saugseite 16 des Schaufelblatts 11 zugeordnet.

Besonders bevorzugt ist eine Ausgestaltung der hier vorliegenden Erfindung, in welcher der mikroprofilierte bzw. mikrostrukturierte Bereich 18 haifischhautartig profiliert bzw. strukturiert ist. Eine derart strukturierter bereich 18 der Saugseite 16 des Schaufelblatts 11 sorgt für eine besonders bevorzugte Umströmung der Gasturbinenschaufel 10.

Fig. 2 zeigt ein Ausführungsbeispiel einer erfindungsgemäßen Gasturbinenschaufel 19. Da die Gasturbinenschaufel 19 gemäß Fig. 2 im Wesentlichen der Gasturbinenschaufel 10 gemäß Fig. 1 entspricht, werden zur Vermeidung unnötiger Wiederholungen für gleiche Baugruppen gleiche Bezugsziffern verwendet. Nachfolgend soll lediglich auf die Unterschiede zwischen den Gasturbinenschaufeln gemäß Fig. 1 und 2 eingegangen werden.

Das Ausführungsbeispiel der Fig. 2 unterscheidet sich von der Fig. 1 dadurch, dass der Saugseite 16 des Schaufelblatts 11 mehrere unterschiedliche mikroprofilierte bzw. mikrostrukturierte Bereiche zugeordnet sind, nämlich im Ausführungsbeispiel der Fig. 2 drei unterschiedliche Bereiche 20, 21 und 22.

So verfügt die Gasturbinenschaufel 10 des Ausführungsbeispiels gemäß Fig. 2 im Bereich der Saugseite 16 des Schaufelblatts 11 über einen ersten, schaufelfußseitigen Bereich 20, der im Sinne der hier vorliegenden Erfindung mikroprofiliert bzw. mikrostrukturiert ausgebildet ist. Dieser erste, schaufelfußseitige Bereich 20 ist dabei einem Abschnitt des Schaufelblatts 11 zugeordnet, welcher hohen Schwingungsbelastungen ausgesetzt ist. Der Bereich 20 ist dabei vorzugsweise derart mikroprofiliert bzw. mikrostrukturiert, dass in diesem Bereich 20 eine Verfestigung des Schaufelblatts 11 erfolgt und/oder Druckspannungen induziert werden. Hierdurch lassen sich neben einer positiven Beeinflussung der Umströmung des Schaufelblatts 11 auch deren Festigkeitseigenschaften optimieren.

Der sich radial außen an den ersten Bereich 20 anschließende Bereich 21 ist ebenfalls mikroprofiliert bzw. mikrostrukturiert ausgeführt, vorzugsweise haifischhautartig wie im Ausführungsbeispiel der Fig. 1.

Ein dritter, mikroprofilierter bzw. mikrostrukturierter Bereich 22 ist der radial außenliegenden Schaufelspitze des Schaufelblatts 11 zugeordnet. Hierdurch kann zum Beispiel die Strömung im Spaltbereich zwischen der als Laufschaufel ausgebildeten Gasturbinenschaufel 19 und einem feststehenden Gehäuse optimiert werden.

Wie Fig. 2 entnommen werden kann, erstrecken sich die beiden mikroprofilierten bzw. mikrostrukturierten Bereiche 20 und 22 über einen größeren Abschnitt der Profilstiefe als der mikroprofilierte bzw. mikrostrukturierte Bereich 21.

Im Sinne der hier vorliegenden Erfindung wird demnach eine Gasturbinenschaufel nach Anspruch 1 vorgeschlagen. Diese mikroprofilierten bzw. mikrostrukturierten Bereiche sind dem Abschnitt der Saugseite des Schaufelblatts zugeordnet, der hinsichtlich einer möglichen Strömungsablösung besonders gefährdet ist. Der Erfindung liegt dabei die Erkenntnis zugrunde, dass gerade dieser Abschnitt der Saugseite hinsichtlich Erosion oder Verschmutzung nur geringfügig beansprucht wird, sodass auch während des Betriebs der Gasturbine die mikrostrukturierten bzw. mikroprofilierten Bereich der Saugseite des Schaufelblatts seine Wirkung beibehalten. Neben der Optimierung der Umströmung des Schaufelblatts kann mithilfe der mikroprofilierten bzw. mikrostrukturierten Bereiche auch die Festigkeit der Gasturbinenschaufel positiv beeinflusst werden. Durch die verbesserte Umströmung der erfindungsgemäß ausgebildeten Gasturbinenschaufeln ergibt sich ein größerer Pumpgrenzabstand und damit ein verbesserter Wirkungsgrad der Gasturbine.

Bei den im Sinne der Erfindung ausgebildeten Gasturbinenschaufeln handelt es sich um rotierende Laufschaufeln eines Verdichters der Gasturbine.

Abschließend sei darauf hingewiesen, dass der oder jeder mikroprofilierte Bereich an der Saugseite der Gasturbinenschaufel durch Lasern, Sputtern oder sonstige Abtragverfahren definiert in die Saugseite des Schaufelblatts eingearbeitet werden kann. Da die Saugseite nur in einem eng begrenzten Abschnitt mit jedem mikroprofilierten Bereich versehen ist, ist die Herstellung kostengünstig möglich.

## Patentansprüche

1. Laufschaufel eines Verdichters einer Gasturbine, insbesondere Schaufel eines Flugtriebwerks, mit einem Schaufelblatt (11) und einem Schaufelfuß (12), wobei das Schaufelblatt (11) von einer Strömungseintrittskante bzw. einer Vorderkante (13), einer Strömungsaustrittskante bzw. einer Hinterkante (15) und einer sich zwischen der Vorderkante (13) und der Hinterkante (14) erstreckenden, eine Saugseite (16) und eine Druckseite (17) bildenden Schaufelblattoberfläche (15) begrenzt ist, wobei die Saugseite mikroprofiliert bzw. mikrostrukturiert ist;
**dadurch gekennzeichnet,**
**dass** die Saugseite (17) des Schaufelblatts (11) drei mikroprofiliert bzw. mikrostrukturiert Bereich (18; 20, 21, 22) aufweist, um eine Umströmung des Schaufelblatts (11) zu optimieren, wobei auf der Saugseite (16) des Schaufelblatts (11) ein erster Schaufelfußseifiger mikrofrofilierter bzw. mikrostrukturierter Bereich (20) vorgesehen ist und wobei ein zweiter sich radial außen an den ersten Bereich (20) anschließender Bereich (21) mikroprofiliert bzw. mikrostrukturiert ist, und wobei ein dritter, mikroprofilierter bzw. mikrostrukturierter Bereich (22) der radial außenliegenden Schaufelspitze des Schaufelblatts (11) zugeordnet ist, und wobei sich beide der erste und der dritte mikroprofilierte bzw. mikrostrukturierte Bereich (20) und (22) über einen größeren Abschnitt der Profilstiefe erstreckt als der zweite mikroprofilierte bzw-mikrostrukturierte Bereich (21).

2. Laufschaufel nach Anspruch 1,
**dadurch gekennzeichnet,**
**dass** der oder jeder mikroprofilierte bzw. mikrostrukturierte Bereich (18; 20, 21, 22) einem Abschnitt der Saugseite (17) des Schaufelblatts (11) zugeordnet ist, an welchem eine Strömungsverzögerung erfolgt.

3. Laufschaufel nach Anspruch 1 oder 2,
**dadurch gekennzeichnet,**
**dass** der oder jeder mikroprofilierte bzw. mikrostrukturierte Bereich (18; 20, 21, 22) einem Abschnitt der Saugseite (16) des Schaufelblatts (11) zugeordnet ist, der sich zwischen 30% und 70% der Profiltiefe des Schaufelblatts (11) erstreckt.

4. Laufschaufel nach Anspruch 3,
**dadurch gekennzeichnet,**
**dass** der oder jeder mikroprofilierte bzw. mikrostrukturierte Bereich (18; 20, 21, 22) einem Abschnitt der Saugseite (16) des Schaufelblatts (11) zugeordnet ist, der sich zwischen 30% und 50% der Profiltiefe des Schaufelblatts (11) erstreckt.

5. Laufschaufel nach einem oder mehreren der Ansprüche 1 bis 4,
**dadurch gekennzeichnet,**
**dass** der oder jeder mikroprofilierte bzw. mikrostrukturierte Bereich (18; 20, 21, 22) haifischhautartig profiliert bzw. strukturiert ist.

6. Laufschaufel nach einem oder mehreren der Ansprüche 1 bis 5,
**dadurch gekennzeichnet,**
**dass** ein schaufelfußseitiger, mikroprofilierter bzw. mikrostrukturierter Bereich (20) derart strukturiert ist, dass in diesem Bereich eine Verfestigung des Schaufelblatts (11) erfolgt und/oder Druckspannungen induziert werden.

## Claims

1. A rotor vane of a compressor of a gas turbine, in particular a vane of an aircraft engine, having a vane blade (11) and a vane footing (12), wherein the vane blade (11) is delimited by a flow-inlet edge or a front edge (13), a flow-outlet edge or a rear edge (14), and a vane-blade surface (15) that extends between the front edge (13) and the rear edge (14) and forms a suction side (16) and a pressure side (17), wherein the suction side is micro-profiled or micro-structured,
**characterised in that** the suction side (16) of the vane blade (11) has three micro-profiled or micro-structured regions (18; 20, 21, 22) in order to optimize flow around the vane blade (11), wherein a first micro-profiled or micro-structured region (20) on the vane-footing side is - provided on the suction side (16) of the vane blade (11), and wherein a second region (21) that follows on from the first region (20) radially on the outside is micro-profiled or micro-structured, and wherein a third micro-profiled or micro-structured region (22) is associated with the radially external vane tip of the vane blade (11), and wherein both the first and the third micro-profiled or micro-structured region (20) and (22) extend over a larger section of the depth of profile than the second micro-profiled or micro-structured region (21).

2. A rotor vane according to claim 1,
**characterised in that** the or each micro-profiled or micro-structured region (18; 20, 21, 22) is associated with a section of the suction side (16) of the vane blade (11) at which deceleration in the flow occurs.

3. A rotor vane according to claim 1 or 2, **characterised in that** the or each micro-profiled or micro-structured region (18; 20, 21, 22) is associated with a section of the suction side (16) of the vane blade (11) that extends between 30% and 70% of the depth of profile of the vane blade (11).

4. A rotor vane according to claim 3,
**characterised in that** the or each micro-profiled or micro-structured region (18; 20, 21, 22) is associated with a section of the suction side (16) of the vane blade (11) that extends between 30% and 50% of the depth of profile of the vane blade (11).

5. A rotor vane according to one or more of claims 1 to 4,
**characterised in that** the or each micro-profiled or micro-structured region (18; 20, 21, 22) is profiled or structured in the manner of sharkskin.

6. A rotor vane according to one or more of claims 1 to 5,
**characterised in that** a micro-profiled or micro-structured region (20) on the vane-footing side is structured in such a way that strengthening of the vane blade (11) is effected in this region and/or compressive stresses are induced.

## Revendications

1. Aube mobile d'un compresseur d'une turbine à gaz, en particulier aube d'un moteur d'aéronef, avec une pale (11) et une emplanture d'aube (12), la pale (11) étant limitée par une arête d'entrée d'écoulement ou une arête avant (13), une arête de sortie d'écoulement ou une arête arrière (15) et une surface supérieure de pale (15), la surface supérieure de pale (15) s'étendant entre l'arête avant (13) et l'arête arrière (14) et formant un côté d'admission (16) et un côté de refoulement (17), le côté d'admission étant microprofilé ou microstructuré, **caractérisée en ce que** le côté d'admission (17) de la pale (11) présente trois zones (18 ; 20, 21, 22) microprofilées ou microstructurées afin d'optimiser un écoulement de contournement de la pale (11), sur le côté d'admission (16) de la pale (11) étant prévue une première zone (20) côté emplanture d'aube microprofilée ou microstructurée et une seconde zone (21) jouxtant radialement à l'extérieur la première zone (20) étant microprofilée ou microstructurée et une troisième zone (22) microprofilée ou microstructurée étant associée à la pointe d'aube radialement extérieure de la pale (11), et les deux première et troisième zones (20, 22) et (22) microprofilées et microstructurées s'étendant sur une plus grande partie de la profondeur profilée que la seconde zone (21) microprofilée ou microstructurée.

2. Aube selon la revendication 1, **caractérisée en ce que** la ou chaque zone (18 ; 20, 21, 22) microprofilée ou microstructurée est associée à une partie du côté d'admission (17) de la pale (11), sur laquelle est effectuée une décélération d'écoulement.

3. Aube selon la revendication 1 ou 2, **caractérisée en ce que** la ou chaque zone (18 ; 20, 21, 22) microprofilée ou microstructurée est associée à une partie du côté d'admission (17) de la pale (11), qui s'étend entre 30 et 70 % de la profondeur profilée de la pale (11).

4. Aube selon la revendication 3, **caractérisée en ce que** la ou chaque zone (18 ; 20, 21, 22) microprofilée ou microstructurée est associée à une partie du côté d'admission (16) de la pale (11), qui s'étend entre 30 et 50 % de la profondeur profilée de la pale (11).

5. Aube selon l'une ou plusieurs quelconques des revendications 1 à 4, **caractérisée en ce que** la ou chaque zone (18 ; 20, 21, 22) microprofilée ou microstructurée est profilée ou structurée telle la peau d'un requin.

6. Aube selon l'une ou plusieurs quelconques des revendications 1 à 5, **caractérisée en ce qu'**une zone (20) côté emplanture d'aube, microprofilée ou microstructurée est structurée de telle sorte que dans cette zone soit effectuée une consolidation de la pale (11) et/ou soient induites des tensions de compression.
